# EUROPEAN PATENT SPECIFICATION

(11) **EP 3 731 978 B1**
(45) Date of publication and mention of the grant of the patent: **07.06.2023**
(21) Application number: 18833325.6
(22) Date of filing: 14.12.2018
(51) Int. Cl.: B09B 3/00, B09B 5/00, A62D 3/178, A62D 3/40

(54) **A METHOD AND PLANT FOR THE DESTRUCTION OF THE CRYSTALLINE STRUCTURE OF MINERAL AND MANMADE FIBERS**
VERFAHREN UND ANLAGE ZUR ZERSTÖRUNG DER KRISTALLSTRUKTUR VON MINERAL- UND HANDGEFERTIGTEN FASERN
PROCÉDÉ ET INSTALLATION POUR LA DESTRUCTION DE LA STRUCTURE CRISTALLINE DE FIBRES MINÉRALES ET ARTIFICIELLES

(30) Priority: 27.12.2017 IT 201700149819
(43) Date of publication of application: 04.11.2020
(73) Proprietor: IGL Innovation Foundry S.r.l., 40026 Imola (IT)
(72) Inventor: Lesci, Isidoro Giorgio, 48014 Castel Bolognese (RA) (IT)
(74) Representative: Rigamonti, Dorotea
(86) International application number: PCT/IB2018/060091
(87) International publication number: WO 2019/130149

(56) References cited:
- EP-A1- 1 946 857
- EP-A1- 2 428 254
- WO-A2-2007/053046
- DE-A1- 19 526 495

## Description

A chemical/physical method for the decomposition of the crystalline structure and fibrous morphology of mineral fibers, such as asbestos, or materials comprising asbestos (ACM), manmade mineral fibers (MMMF) including manmade vitreous fibers (MMVF) forms the object of the present invention.

Surprisingly, the method according to the present invention is capable of transforming the dangerous material into a safe raw material (SRM).

### Background art

The term "asbestos" is used to define minerals with fibrous-asbestiform characteristics. According to Italian law, chrysotile (serpentine asbestos), actinolite, amosite, anthophyllite, crocidolite and tremolite (amphibolic asbestos) are classified as asbestos minerals. The fibrous-asbestiform characteristics, which determine the extraordinary technological properties of asbestos, are also one of the causes of the toxicity of the same. In fact, the fibers released into the air, of micrometric dimensions and elongated morphology, can pass through the nasal mucous filter and reach the lungs and be deposited in the tissues. It has been proven that the inhalation of asbestos fibers is responsible for serious diseases of the respiratory system, such as mesothelioma. Hence, the trend in many countries all over the world is the gradual removal of asbestos.

However, it should be pointed out that due to the characteristics, which distinguish it and the contained costs, it continues to be used in a variety of applications. The most commonly produced asbestos products on the market today include corrugated galvanized iron and asbestos-cement sheets, panels, tubes, tiles, pipes and connectors for pipes.

Asbestos is divided into two mineral groups: serpentine and amphibole. Serpentine asbestos has a layered structure, wherein the amphiboles have a chain structure. As the only member of the serpentine group, chrysotile (A, B) is the commonest type of asbestos found in buildings and it is the prevailing fibrous form.

In nature, samples typically contain cations, which are different from those used to describe double-layer structure: Al⁺³ and Fe⁺³ can replace Si⁺⁴, and Fe⁺², Fe⁺³, Mn⁺² and Ni⁺² can replace Mg⁺² in varying amounts. The replacements can be summed up in a formula of the type: (Mg_{3-x-y}Rₓ⁺²R_{y}⁺³) (Si_{2-y}R_{y}⁺³)O₅(OH)₄ where R⁺² = Fe⁺², Mn⁺², Ni⁺² and R⁺³ = Al⁺³, Fe⁺³.

Chrysotile is a fibrous mineral, which does not burn and which does not rot, it is resistant to most chemical substances, it is flexible and possesses an elevated resistance to traction. This unique combination of properties makes chrysotile a highly useful material, which has been used for many decades as a main component of products made of light reinforced concrete, friction materials, seals and seals for high temperatures and a myriad of other uses. Chrysotile constitutes about 90%-95% of all asbestos contained in buildings in the United States.

In the amphiboles group there are five types of asbestos: amosite or "brown asbestos" is the second commonest type of asbestos in construction materials, crocidolite or "blue asbestos", asbestos present in high temperature applications, anthophyllite, tremolite and actinolite, which are rare and principally found as contaminants in other minerals.

The group of amphibole minerals, including crystalline asbestos, is based on the structure of the double chain silicate tetrahedron, cross-linked with bridging cations. The basic structural unit is (Si₄O₁₁⁻⁶). The formula is of the type W₀₋₁X₂Y₅Z₈O₂₂ (OH, F)₂ where W = Na⁺¹ or K⁺¹ in a site A with from 10 to 12 co-ordinations. X = Ca⁺², Na⁺¹, Mn⁺², Fe⁺², Mg⁺², Fe⁺³, in a site M4 with from 6 to 8 co-ordinations. Y = Mn⁺², Fe⁺², Mg⁺², Fe⁺³, Al⁺³ or Ti⁺⁴ in an octahedral M1 coordination site. Z = Si⁺⁴ and Al⁺³ in the tetrahedral site.

Depending on the level of crystallinity, the entire spectrum of inorganic fibers can be subdivided into two classes: manmade mineral fibers (MMMF) and manmade vitreous fibers (MMVF). The MMMF group comprises polycrystalline fibers, while the fibers belonging to the MMVF group are generally amorphous. The MMVF are frequently indicated as silicate-based glass fibers, however, besides fiberglass and fused silica, other amorphous fibers are used: combinations of alumina and silica, mineral wool and waste, as well as fibers with non-silicate compositions, such as carbon. Crystallinity is considered one of the main parameters determining the bio-persistence of fibers. The bio-persistence of a breathable fiber is defined as the period of time in which a fiber remains in the lung.

Most of the non-asbestos fibers commonly used today belong to this category.

Amphiboles like crocidolite asbestos decompose at about 1050° - 1100 °C.

Vitrification is thus one of the most successful treatment processes. The advantage of vitrification derives from the complete destruction of the fibrous structure and from the formation of a mixture forming the glass, which can be recycled as secondary glass material. In the INERTAM-Europlasma process, ACM plasma torch vitrification at 1600°C takes place in a cylindrical furnace. At present, this is the only conversion method of ACM, which has been converted successfully from the laboratory scale in a fixed industrial plant to a large scale, with highly elevated process costs.

An alternative for denaturation of asbestos comes from the biochemical and microbiological approach, based on the disintegration of the crystal planes of brucite (oxygen-magnesium) present in the crystalline planes of chrysotile as an indirect effect of the metabolism of the bacterial cultures used. The decomposition of the crystal planes seems to be due to the acidification of the reaction environment, due to the presence of metabolites secreted from the bacteria. The process comprises the steps of preparing an acid liquid and the consequent treatment of the ACM with said acid solution/suspension at a temperature of 120°-170°C and pressure of 2-10 bar. One of the problems inevitably correlated to this method can be found in the management and supply of the biological waste. Due to the elevated microbial content, these give off bad smells. Furthermore, the process is slow because of the formation of chemical equilibriums, which do not make the decarboxylation reaction of the carbonate present in the cement matrix completely spontaneous. Also, during the first step, there is a precipitation of salts, which tend to incorporate the asbestos fibers, thus making it unavailable for the reaction. Finally, on an industrial scale, it is difficult to maintain a constant temperature inside the system, making the final product non-homogenous.

WO2007/053046A2 discloses a method for decomposition of asbestos.

Thus, the need is strongly felt for systems, which can be adopted on an industrial scale and which are cost-effective for the decomposition of asbestos.

### Description of the invention

### Description of the figures

Figure 1: block diagram of an embodiment of the process according to the present invention.
Figure 2: diagram of the first container of a movable plant.
Figure 3: diagram of the second container of a movable plant.
Figure 4: ACM, (A) diffraction profile (B) scanning optical microscope image.

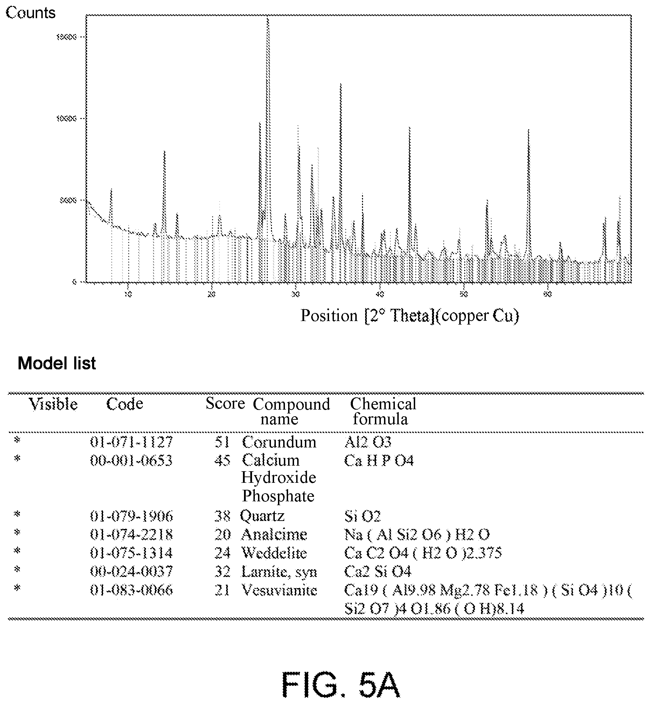

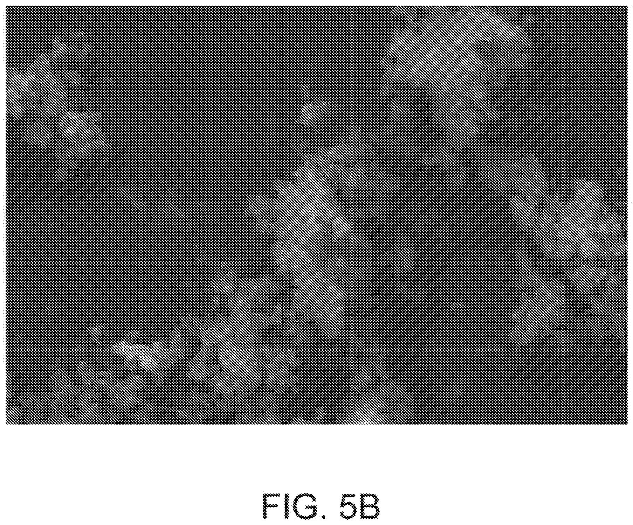

Figure 5: ACM treated according to one embodiment of the method according to the present invention, (A) diffraction profile (B) scanning optical microscope image.
Figure 6: ACM treated according to a further embodiment of the method according to the present invention, (A) diffraction profile (B) scanning optical microscope image.
Figure 7: ACM treated according to a further embodiment of the method according to the present invention, (A) diffraction profile (B) scanning optical microscope image.
Figure 8: ACM treated according to a further embodiment of the method according to the present invention, (A) diffraction profile (B) scanning optical microscope image.
Figure 9: MMMF/MMVF before treatment, (A) diffraction profile (B) scanning optical microscope image.
Figure 10: MMMF/MMVF treated according to one embodiment of the method according to the present invention, (A) diffraction profile (B) scanning optical microscope image.
Figure 11: MMMF/MMVF treated according to one embodiment of the method according to the present invention, diffraction profile of the product obtained.

The method for the decomposition of asbestos, materials comprising asbestos, ACM, MMMF, MMVF according to the present invention comprises:
- fragmentation of asbestos, ACM, MMMF, MMVF for obtaining fine particles;
- controlled cavitation;
- reaction with microwaves at a temperature from 100 to 250°C, P between 1 to 50 atm, in the presence of a metal catalyst.

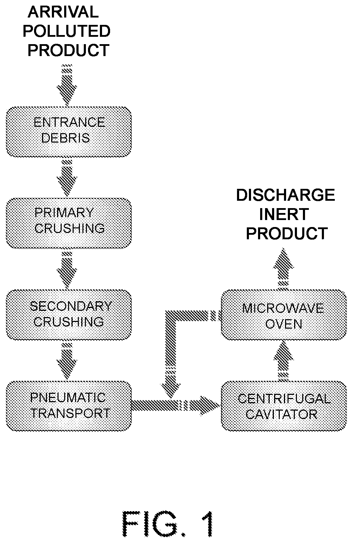

The block diagram in figure 1 represents an embodiment of the process according to the present invention.

In one embodiment, said fragmentation is pushed until obtaining particles having a diameter from 0.1 to 100 mm, preferably between 0.1 and 1 mm.

In one embodiment, said fragmentation is obtained by means of cryo-grinding. In a further embodiment, it is obtained by means of traditional grinding.

In one embodiment, said cavitation is carried out at a T between 20 and 80°C, preferably at 40°C.

In one embodiment, said cavitation process is carried out in an acid environment and said acidity is obtained by the addition of inorganic acid, or by the addition of acid deriving from organic decomposition, or from acid waste of the food industry.

In a further, particularly preferred embodiment, where said material is MMMF or MMVF, said cavitation process is carried out in a basic environment and said basicity is obtained by the addition of inorganic bases, or by the addition of industrial waste, such as pickling bases.

Said microwave treatment is carried out in the presence of a metal catalyst, which is selected from one or more of the metals and/or oxides and/or salts of: Iron, Aluminum, Barium, Calcium, Lead, Lithium, Fluorine, Titanium.

Surprisingly, it was demonstrated here that unique advantages are obtained in the treatment of inorganic materials due to the interactions between microwaves and materials and the processes activated by these. In fact, unlike heat treatments, which use sources of heat different from microwaves, such as, for example, conventional furnaces, microwave irradiation penetrates and simultaneously heats most of the material because the material itself converts the energy when hot. The interaction of the microwaves with pretreated ACM, MMMF or MMVF, at the indicated temperatures and pressure and in the presence of a catalyst, completely destroy and collapse the crystalline structure of the asbestos, or other fibrous mineral materials, such as MMMF or MMVF, with the consequent release of SiO₂, Mg, Al, Fe and other minor metals. Surprisingly, the parameters selected here create the thermodynamic conditions for an isomorphic replacement between metals (catalysts) present in the suspension and the structure of said fibrous mineral materials, modifying the morphology thereof.

The microwave reaction in a closed system completes the transformation of said pre-treated fibrous mineral materials, resulting in an inert material, which is not harmful to human health.

During this step, the dissolution of the asbestos, and preferably of the chrysotile, is the principal chemical reaction, which is improved by operating in an acid environment.

The dissolution reaction for chrysotile at pH <9 is:

Mg₃Si₂O₅(OH)₄ + 6H⁺ → 3Mg⁺² +H₂O + 2H₄SiO₄

The isomorphic replacements of Mg and Si by metals, such as, for example, Fe⁺³ and Al⁺³, and also Ba, Ca, Pb, Li, F, Ti sometimes occur in the asbestos structure, inducing a flattening of the layers of brucite and, consequently, a change in morphology from fibrous to flat, like lizardite ((Si₄₋ₓAlₓ) (Mg₆₋ₓAlₓ) O₁₀ (OH)₈, with x from 0 to 2.5) and/or forsterite (Mg₂SiO₄) and other mineral steps, depending on the acid source and the matrix comprising the asbestos.

A mixture of the aforesaid metals and/or oxides and/or salts of the metals was used in the present invention.

In the case of MMVF, the treatment described herein results in a complete change of the structure during the microwave reaction in a closed system. In this condition, at 200-250 °C and 10-15 bar, hydrolysis of the silica network in the oxygen binding sites is notably accelerated, as shown below:

Si-O-Si + H2O⇔Si-OH + HO-Si

or the ion exchange in non-binding oxygen sites:

Si-O- Na⁺ + H₃O⁺ ⇔Si-OH + Na⁺ + H₂O

An ion exchange with other metals also occurs forming silicate (like the calcium silicate).

Furthermore, the main substances obtained (liquid, solid and gaseous) are completely recovered in the useful SRM. In fact, the main metals in the liquid can be extracted and purified, the solids contain converted silicate, silica, nitrate, phosphate, which are adapted for agriculture as solid-base fertilizers. The gas produced (CO₂) is purified and used as reactive gas for industry.

The method according to the present invention is capable of treating asbestos contained in a compact and friable matrix, such as cement, polymer, malt, as well as fibers not containing asbestos, such as MMMF / MMVF.

Advantageously, the method according to the present invention results in a progressive destruction of the chemical structure of the dangerous fibers, operating in relatively mild conditions. The structural change carried out on the materials allows safe raw material to be recovered and used again.

A plant for implementing the aforesaid method forms a further aspect of the present invention.

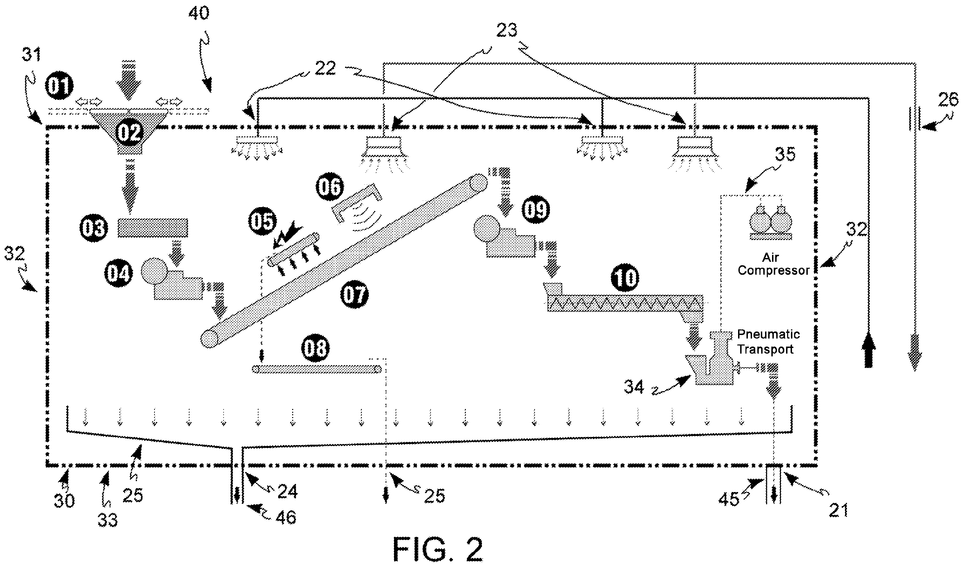

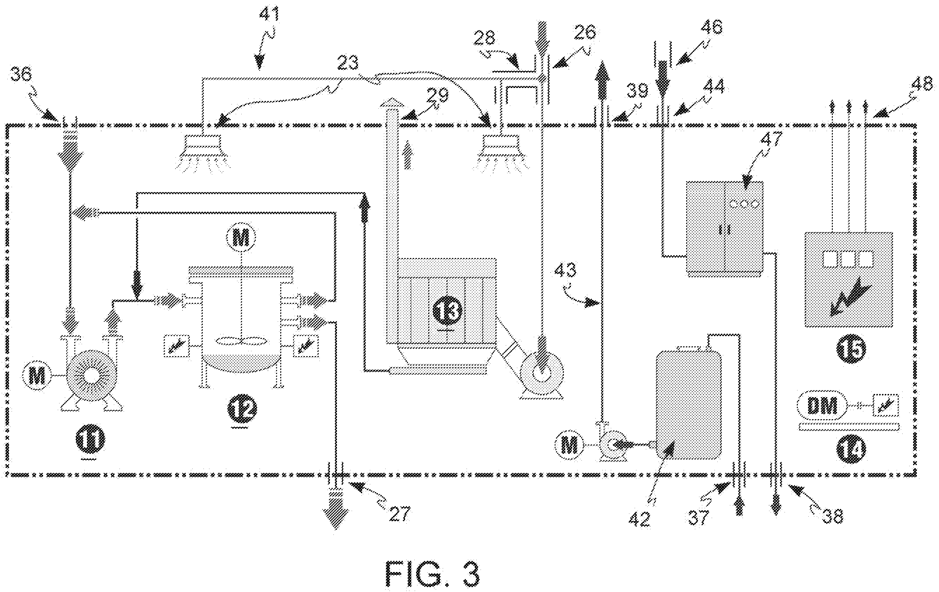

In one embodiment, said plant is fixed. In a further embodiment, schematized in figure 2 and 3, said plant is movable.

The movable plant is particularly advantageous, where it makes the method directly implementable at the site of recovery of said dangerous materials, excluding the costs and risks typically connected with the transport of the same.

In one embodiment, said movable plant is housed in a first and in a second container.

Said first container (40) and said second container (41) are each a closed volume, provided with openings towards the outside, limited by a lower surface (30), which forms the base (33) of said container, an upper surface (31) and lateral surfaces 32. Said first container (40) comprises:
- at least one feeding hopper (2), adapted to receive the materials to be submitted to the process;
- at least one crusher for crushing said materials, preferably a primary crusher (4) and a secondary crusher (9);
- at least one outlet port (21), from which said pretreated materials exit and are conveyed, through a connecting channel (45) to said second container (41).

Said first container (40) also comprises at least one nozzle (22) through which water is introduced into said first container (40), preferably comprising a series of nozzles (22), which inject water from above into said first container and a collection system (25) of said water, where said collection system (25) is placed above said base (33) and makes said water flow to a channel (46), which passes through an outlet port (24).

In one embodiment, said container also comprises at least one suction cap (23), which draws in the fumes from said first container and conveys them to a channel (26).

In one embodiment, said first container also comprises a cover (1), preferably a shutter-like cover, provided with sensors, adapted to close said hopper (2). Said materials pass from said hopper (2), preferably through a combined vibration feeder (3), to said primary crusher (4), which is preferably a jaw crusher. After said first crushing, the materials are conveyed by a conveyor belt (7) to said secondary crusher (9), which is preferably a gridcrusher. The material in transit on said conveyor belt (7) is controlled by a metal detector (6). Any metal material in transit, by means of a magnetic conveyor separator (5), are picked up from said conveyor belt (7) and guided to an outlet port (25), preferably by means of a conveyor belt (8), which conveys them to an external container for ferrous materials.

After the crushing carried out by said secondary crusher (9), said treated materials are conveyed, through a screw feeder (10), with a pneumatic transport system (34), to said outlet port (21). Said pneumatic transport (34) is carried out by a compressor (35), which is also inside said first container.

Said second container (41) comprises:
- at least one inlet port (2), adapted to receive the pretreated materials exiting said first container (40);
- at least one centrifugal cavitator (11);
- at least one microwave oven (12), where said microwave oven works at a controlled temperature and pressure;
- at least one outlet port (27), from which said inert product exits.

Said second container (41) also comprises at least one suction cap (23), which draws in the fumes from said second container and conveys them to a channel (28). Said channel (28) is inserted into said channel (26), exiting said first container (40), which brings together said fumes drawn into said second container (41), which comprises a suction and powder elimination plant (13), connected to the outside with a chimney (29).

Said second container (41) also comprises an inlet port (37) for loading water from the mains, which is preferably stored in a tank (42) and therefrom is pumped into a tube (43), which, passing through an outlet port (39), conveys it to said nozzles (22).

Said second container (41) also comprises an inlet port (44) through which the channel (46) enters, introducing into said second container the water to be treated exiting said first container. Said water to be treated passes through a water treatment unit (47) inside said second container, exiting as purified water through an outlet port (38).

Said movable plant is fed by a generator, which is preferably an electric diesel 150 Kw motor generator, preferably said generator (14) is housed in said second container.

Said plant is further provided with an electrical system, preferably a system (15) housed in said second container, from which electrical lines (48) start towards said first container. Said movable plant is therefore a completely autonomous plant, into which the materials to be treated and mains water are introduced, and from which products exit, fully compatible with the environment, such as exhaust fumes from the chimney (29), treated in advance by the plant (13), waste water purified by the treatment unit (47), ferrous materials and the inert processed product.

Said movable plant is advantageously placed directly on site and avoids the onerous transport of materials to be treated, allowing the treatment thereof in situ with the production, in situ, of ferrous materials and an inert processed product, which can be used again on the same site.

A person skilled in the art knows how to organize the elements which form said movable plant and understands how the embodiment described herein, which comprises a first and a second container and the housing in the two containers of said elements is only one of the possible embodiments.

The following examples have the object of better illustrating the process according to the present invention and shall not be considered limiting of the same in any way.

### Examples

### Example 1: ACM treatment with Al catalyst

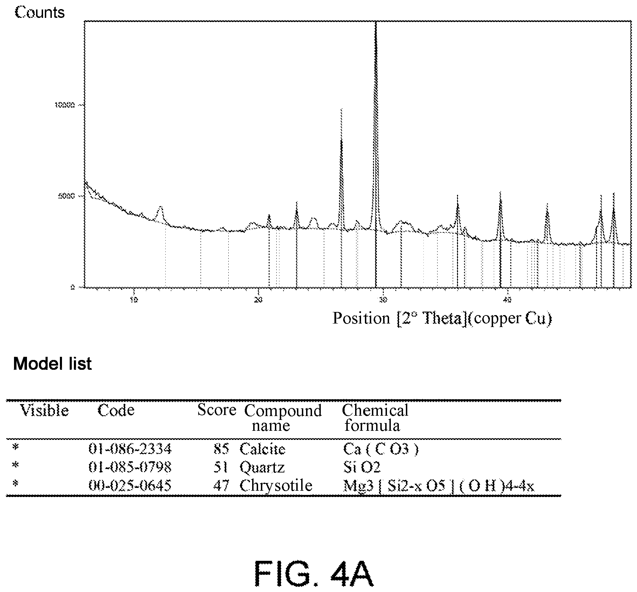

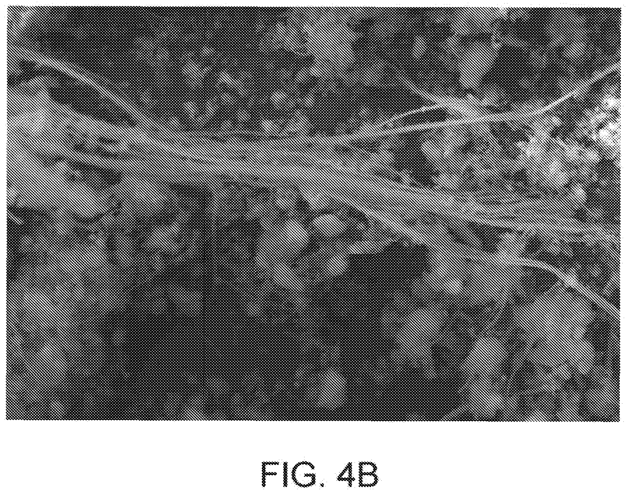

100 gr of ACM were ground and added to 100 ml of recovery acid at pH 3. The suspension was allowed to pass through a controlled cavitation device, at a temperature of 40°C. After 15 minutes, the CO₂ formation reaction was complete, the pH was corrected until 3 and Al and/or Al³⁺ were added in an amount from 0.6 to 2% (V/V) with respect to the total mass. The suspension was treated with microwaves in a closed system under thermodynamic control for 1h. Figure 4 shows, (A) the diffraction profile and (B) the scanning optical microscope image of the product obtained. Note the practically complete absence of fibrous component after the treatment.

### Example 2: ACM treatment with Fe catalyst

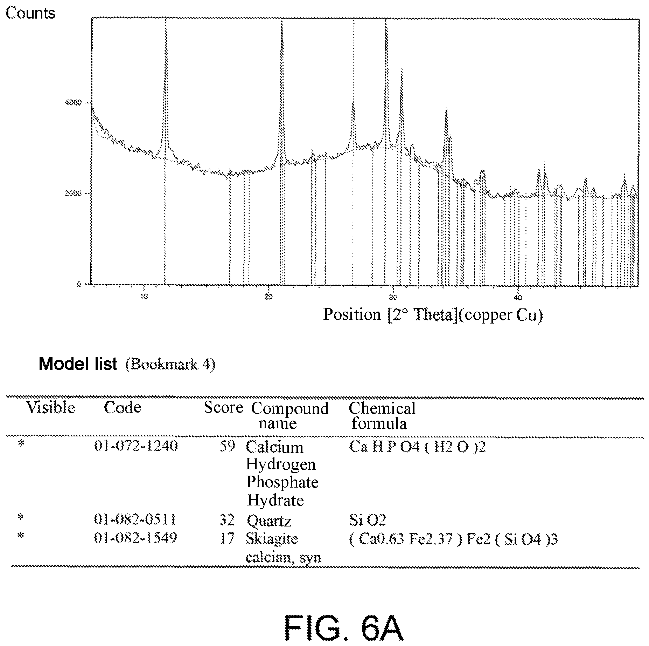

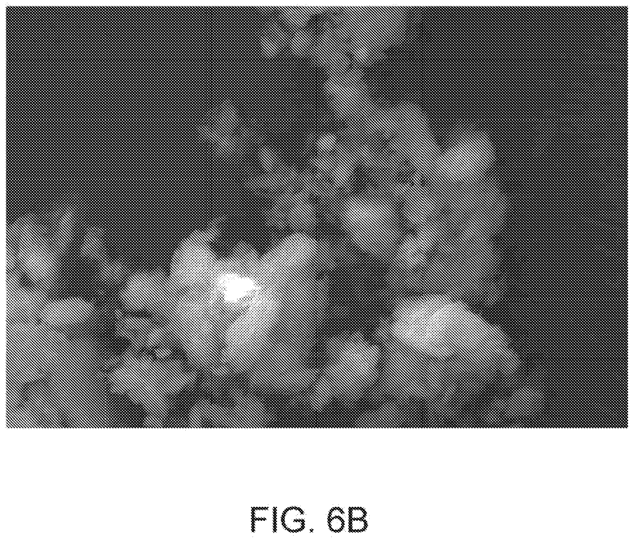

100 gr of ACM were ground and added to 100 ml of recovery acid at pH 3. The suspension was allowed to pass through a controlled cavitation device at a temperature of 40 °C. After 15 minutes, the CO₂ formation reaction was complete, the pH was corrected until 3 and Fe and/or Fe³⁺ were added in an amount from 0.6 to 3% (V/V) with respect to the total mass. The suspension was treated with microwaves in a closed system under thermodynamic control for 1h. Figure 6 shows, (A) the diffraction profile and (B) the scanning optical microscope image of the product obtained. Note the practically complete absence of fibrous component after the treatment.

### Example 3: ACM treatment with Ti catalyst

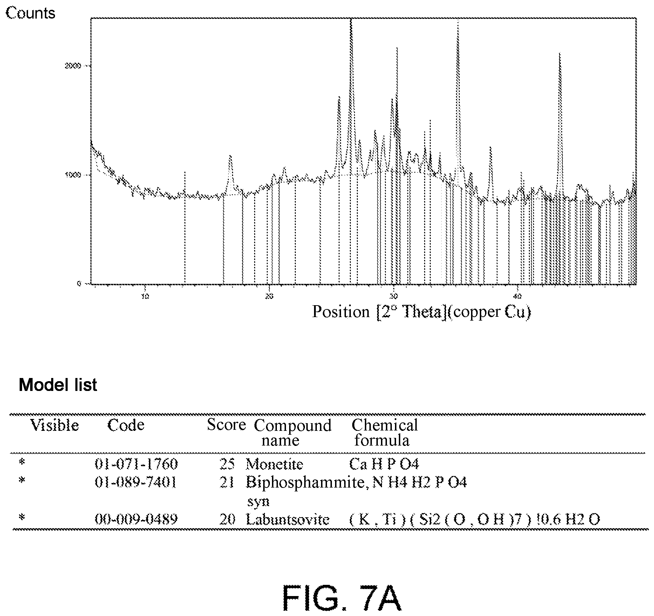

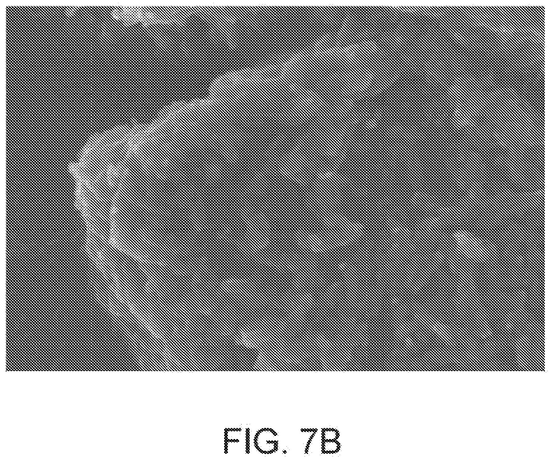

100 gr of ACM were ground and added to 100 ml of recovery acid at pH 3. The suspension was allowed to pass through a controlled cavitation device at a temperature of 40 °C. After 15 minutes, the CO₂ formation reaction was complete, the pH was corrected until 3 and Ti and/or Ti²⁺ were added in an amount from 0.6 to 3% (V/V) with respect to the total mass. The suspension was treated with microwaves in a closed system under thermodynamic control for 1h. Figure 7: ACM treated according to one embodiment of the method according to the present invention, (A) diffraction profile (B) scanning optical microscope image.

### Example 4: ACM treatment with Al/Fe catalyst

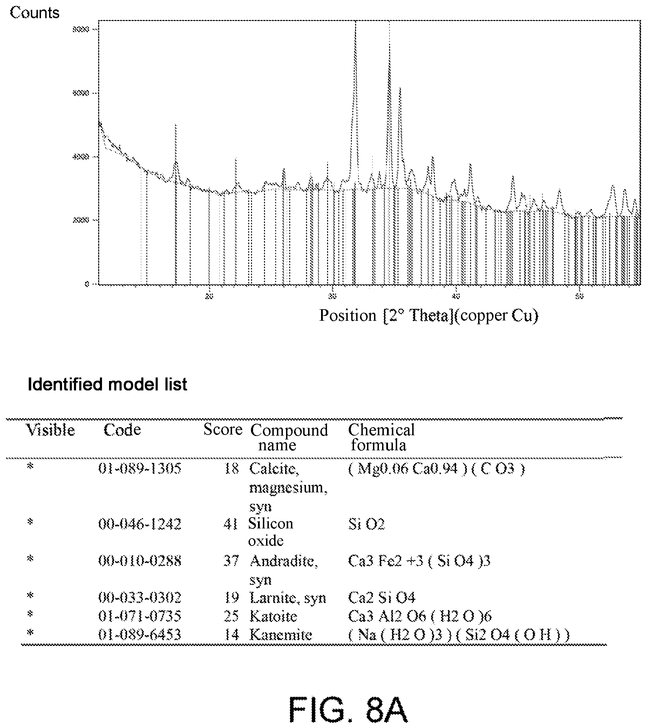

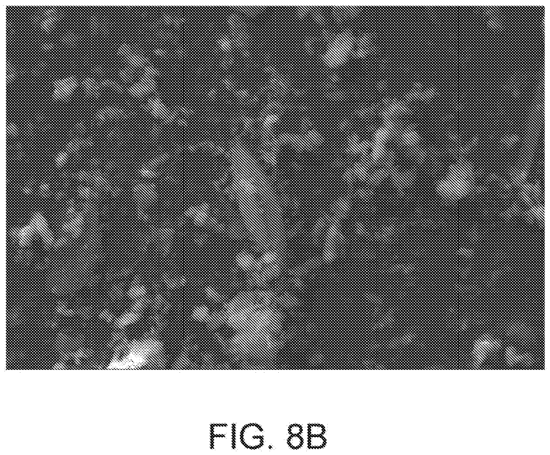

100 gr of ACM were ground and added to 100 ml of recovery acid at pH 3. The suspension was allowed to pass through a controlled cavitation device at a temperature of 40°C. After 15 minutes, the CO₂ formation reaction was complete, the pH was corrected until 3 and a mixture of Al/Fe and/or Al³⁺/Fe³⁺ was added in a ratio 1/1-1/2-1/3-1/4 or 2/1-3/1-4/1 preferably 1/1, in an amount from 0.6 to 3% (V/V) with respect to the total mass. The suspension was treated with microwaves in a closed system under thermodynamic control for 1h. Figure 8 shows, (A) the diffraction profile and (B) the scanning optical microscope image of the product obtained. Note the practically complete absence of fibrous component after the treatment.

### Example 5: MMMF/MMVF treatment at acid pH

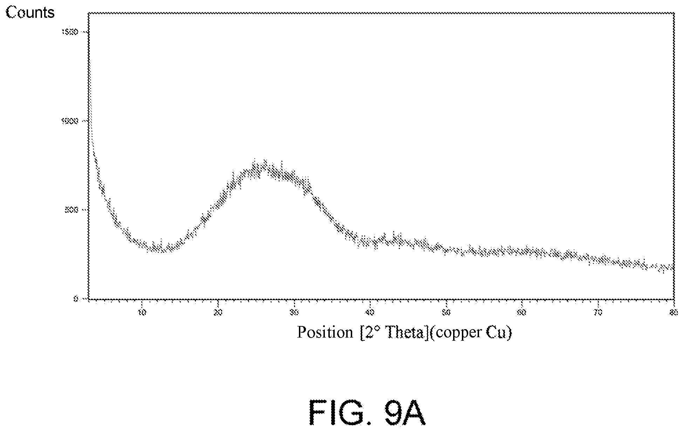

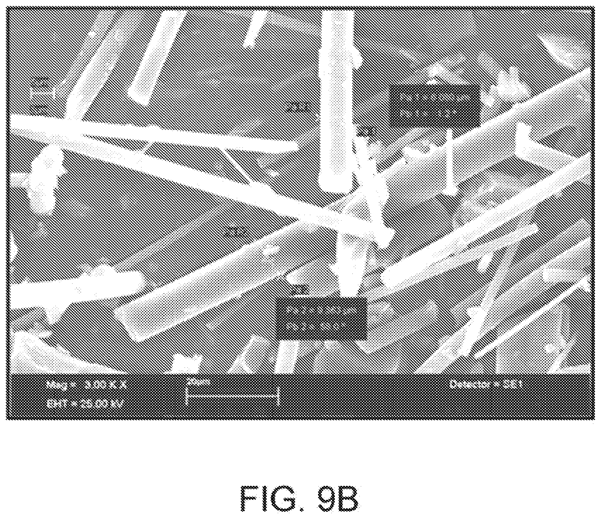

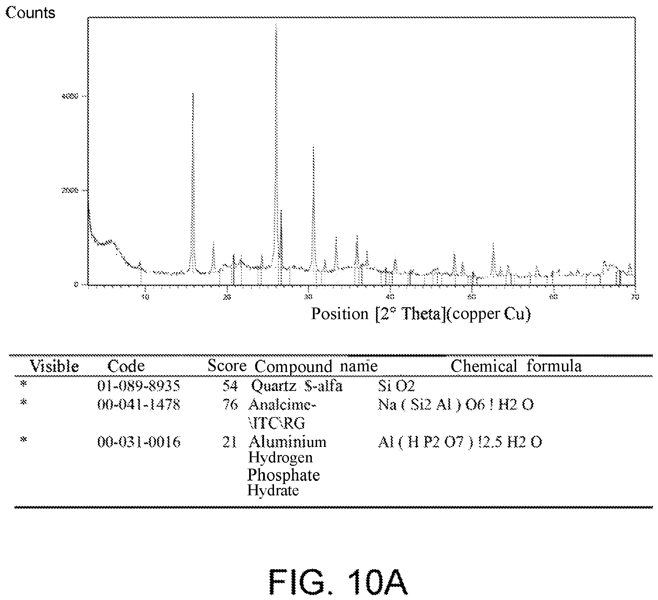

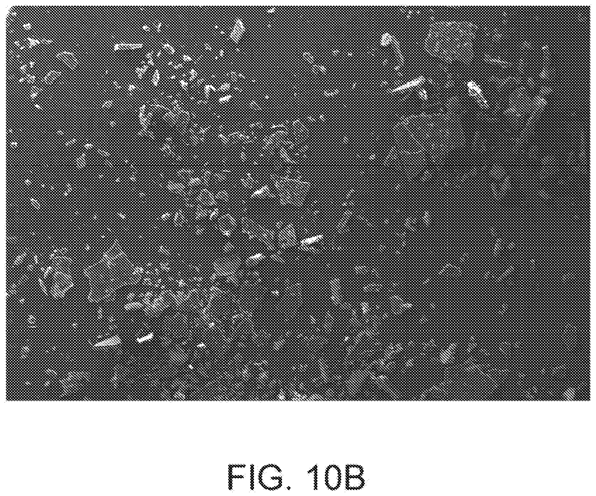

100 gr of MMMF/MMVF were ground and added to 100 ml of recovery acid at pH 3. The suspension was allowed to pass through a controlled cavitation device at a temperature of 40°C. After 15 minutes, the CO₂ formation reaction was complete where there was the presence of a cement matrix with the waste, in a reactor containing calcium carbonate, and the pH was corrected until 3, in the presence of a metal catalyst. The suspension was treated with microwaves in a closed system under thermodynamic control for 1h. Figure 10 shows (A) the diffraction profile and (B) a scanning optical microscope image of the product obtained, placed in comparison with the starting material, figure 9 (A), (B).

### Example 6: MMMF/MMVF treatment at basic pH

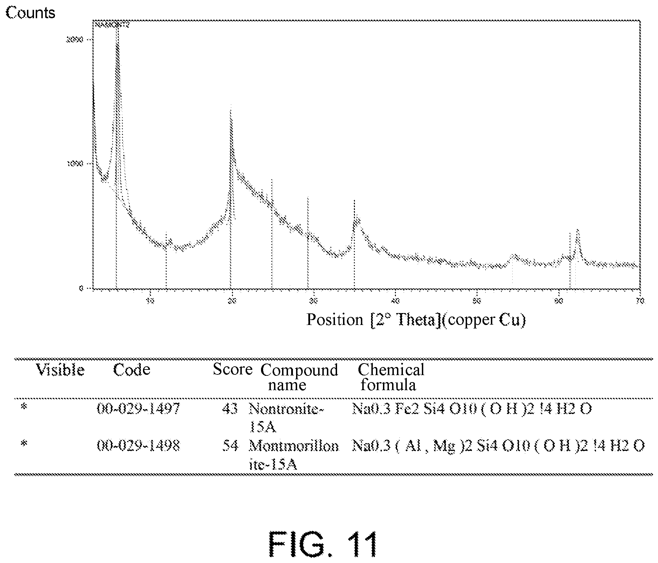

100 gr of MMMF/MMVF were ground and added to 100 ml of recovery base at pH ≥ 10. The suspension was allowed to pass through a controlled cavitation device at a temperature of 40°C and in the presence of a metal catalyst to break down and damage the fibers. The suspension was treated with microwaves in a closed system under thermodynamic control for 1h. Figure 11 shows the diffraction profile of the product obtained.

## Claims

1. A method for the decomposition of asbestos, materials comprising asbestos (ACM), manmade mineral fibers (MMMF), including manmade vitreous fibers (MMVF), wherein said method comprises :
a) fragmentation of mineral fibers, such as asbestos, ACM, MMMF, MMVF for obtaining fine particles;
b) controlled cavitation;
c) reaction with microwaves at a temperature between 100 and 250°C, P between 1 and 50 atm, in the presence of a metal catalyst;
d) obtaining a processed product that is a safe raw material (SRM).

2. The method according to claim 1, wherein said fragmentation is protracted until obtaining particles having a diameter ranging from 0.1 to 100 mm, preferably between 0.1 and 1 mm.

3. The method according to one of the claims 1 or 2, where said fragmentation is obtained by cry-grinding or by conventional grinding .

4. The method according to claim 1, where said cavitation is carried out at a T of between 20 and 80°C, preferably at 40 ° C .

5. The method according to one of the claims from 1 to 4, wherein said cavitation is carried out in an acid environment and said acidity is obtained by the addition of inorganic acid, or by the addition of acid deriving from organic decomposition, or from acid waste of the food industry.

6. The method according to one of the claims from 1 to 4, wherein said material is MMMF or MMVF and said cavitation process is carried out in a basic environment and said basicity is obtained by the addition of inorganic bases, or by the addition of industrial waste, such as pickling bases.

7. The method according to one of the claims from 1 to 6, wherein said metal catalyst is selected from one or more of the metals and/or oxides and/or Salts of: Iron, Aluminium, Barium, Calcium, Lead, Lithium, Fluorine, Titanium.

8. A plant for implementing the method according to one of the claims from 1 to 7, which is a movable plant and comprises at least a first (40) and a second container (41), where said containers (40, 41) are each a closed volume, and said first container (40) comprises :
- at least one feeding hopper (2), adapted to receive the materials to be submitted to the process;
- at least one crusher for crushing said materials, a primary crusher (4) and a secondary crusher (9);
- at least one outlet port (21), from which said pretreated materials exit and are conveyed, through a connecting channel (45), to said second container (41), which comprises:
- at least one inlet port (2), adapted to receive said pretreated materials exiting said first container (40);
- at least one centrifugal cavitator (11);
- at least one microwave oven (12), where said microwave oven works at controlled temperature and pressure;
- at least one outlet port (27), from which said inert product (SRM) exits.

9. The plant according to claim 8, wherein said containers (40, 41) are limited by a lower surface (30), forming the base (33) of said container, an upper surface (31) and lateral surfaces (32) and said first container (40) also comprises at least one nozzle (22) through which water is introduced into said first container (40), comprising a series of nozzles (22), which inject water from above into said first container (40) and a collection system (25) of said water, where said collection system (25) is placed above said base (33) and makes said water flow to a channel (46), which passes through an outlet port (24) .

10. The plant according to claim 9, wherein said second container (41) also comprises an inlet port (37) for loading water from the mains, which is preferably stored in a tank (42) and hence is pumped into a tube (43) which, passing through an outlet port (39), conveys it to said nozzles (22).

11. The plant according to claim 9 or 10, wherein said second container (41) also comprises an inlet port (44) through which the channel (46) enters, injecting into said second container (41) the water to be treated exiting said first container (40), passing through a water treatment unit (47) inside said second container (41) to exit as purified water through an outlet port (38) .

## Patentansprüche

1. Verfahren zur Zersetzung von Asbest, asbesthaltigen Materialien (ACM), künstlich hergestellte Mineralfasern (MMMF), einschließlich künstlich hergestellter glasartiger Fasern (MMVF), wobei das Verfahren aufweist:
a) Fragmentierung von Mineralfasern, wie Asbest, ACM, MMMF, MMVF, um feine Partikel zu erhalten;
b) kontrollierte Kavitation;
c) Reaktion mit Mikrowellen bei einer Temperatur zwischen 100 und 250°C, Druck P zwischen 1 und 50 atm, in Gegenwart eines Metallkatalysators;
d) Gewinnen eines verarbeiteten Produkts, das ein sicheres Rohmaterial (SRM) ist.

2. Verfahren nach Anspruch 1, wobei die Fragmentierung so lange durchgeführt wird, bis die Partikel einen Durchmesser zwischen 0,1 und 100 mm, vorzugsweise zwischen 0,1 und 1 mm aufweisen.

3. Verfahren nach einem der Ansprüche 1 oder 2, wobei die Fragmentierung durch Kryomahlen oder durch herkömmliches Mahlen erhalten wird.

4. Verfahren nach Anspruch 1, bei dem die Kavitation bei einer Temperatur T von zwischen 20 und 80°C, vorzugsweise bei 40°C, durchgeführt wird.

5. Verfahren nach einem der Ansprüche 1 bis 4, wobei die Kavitation in einer sauren Umgebung durchgeführt wird und der Säuregrad durch Zugabe von anorganischer Säure oder durch Zugabe von Säure, die aus der Zersetzung organischer Stoffe stammt, oder von sauren Abfällen aus der Lebensmittelindustrie erhalten wird.

6. Verfahren nach einem der Ansprüche 1 bis 4, wobei das Material MMMF oder MMVF ist und der Kavitationsprozess in einer basischen Umgebung durchgeführt wird und der Basengrad durch die Zugabe von anorganischen Basen oder durch die Zugabe von Industrieabfällen, wie z.B. Beizbasen, erhalten wird.

7. Verfahren nach einem der Ansprüche 1 bis 6, wobei der Metallkatalysator ausgewählt ist aus einem oder mehreren der Metalle und/oder Oxide und/oder Salze von: Eisen, Aluminium, Barium, Calcium, Blei, Lithium, Fluor, Titan.

8. Anlage zum Durchführen des Verfahrens nach einem der Ansprüche 1 bis 7, die eine bewegliche Anlage ist und mindestens einen ersten (40) und einen zweiten Behälter (41) aufweist, wobei die Behälter (40, 41) jeweils ein geschlossenes Volumen haben, und der erste Behälter (40) aufweist:
- mindestens einen Beschickungstrichter (2), der geeignet ist, die dem Prozess zuzuführenden Materialien aufzunehmen;
- mindestens einen Brecher zum Zerkleinern der Materialien, einen Primärbrecher (4) und einen Sekundärbrecher (9);
- mindestens eine Auslassöffnung (21), aus der die vorbehandelten Materialien austreten und durch einen Verbindungskanal (45) zu dem zweiten Behälter (41) befördert werden, der aufweist:
- mindestens eine Einlassöffnung (2), die geeignet ist, die aus dem ersten Behälter (40) austretenden, vorbehandelten Materialien aufzunehmen;
- mindestens einen Zentrifugalkavitator (11);
- mindestens einem Mikrowellenherd (12), wobei der Mikrowellenherd bei kontrollierter Temperatur und kontrolliertem Druck arbeitet;
- mindestens eine Auslassöffnung (27), aus der das inerte Produkt (SRM) austritt.

9. Anlage nach Anspruch 8, wobei die Behälter (40, 41) durch eine unteren Fläche (30), die den Fuß (33) des Behälters bildet, einer oberen Fläche (31) und Seitenflächen (32) begrenzt sind und der erste Behälter (40) auch mindestens eine Düse (22), durch die Wasser in den ersten Behälter (40) eingeleitet wird, aufweist, bestehend aus einer Reihe von Düsen (22), die Wasser von oben in den ersten Behälter (40) einspritzen, und einem Sammelsystem (25) für das Wasser, wobei das Sammelsystem (25) oberhalb des Fußes (33) angeordnet ist und das Wasser zu einem Kanal (46) fließen lässt, der durch eine Auslassöffnung (24) läuft.

10. Anlage nach Anspruch 9, wobei der zweite Behälter (41) auch eine Einlassöffnung (37) aufweist zum Beschicken von Wasser aus dem Leitungsnetz, das vorzugsweise in einem Tank (42) gespeichert ist und daher in ein Rohr (43) gepumpt wird, das, durchquerend eine Auslassöffnung (39), es zu den Düsen (22) befördert.

11. Anlage nach Anspruch 9 oder 10, wobei der zweite Behälter (41) ebenfalls eine Einlassöffnung (44) aufweist, durch die der Kanal (46) eintritt, der das aufzubereitende Wasser in den zweiten Behälter (41) einspritzt, das aus dem ersten Behälter (40) austritt und durch eine Wasseraufbereitungseinheit (47) innerhalb des zweiten Behälters (41) fließt, um als gereinigtes Wasser durch eine Auslassöffnung (38) auszugeben.

## Revendications

1. Procédé pour la décomposition de l'amiante, de matériaux comprenant de l'amiante (ACM), de fibres minérales artificielles (MMMF), y compris des fibres vitreuses artificielles (MMVF), dans lequel ledit procédé comprend :
a) une fragmentation de fibres minérales, telles que de l'amiante, des ACM, des MMMF, des MMVF pour obtenir des particules fines ;
b) une cavitation contrôlée ;
c) une réaction avec des micro-ondes à une température entre 100 et 250 °C, une P entre 1 et 50 atm, en présence d'un catalyseur métallique ;
d) une obtention d'un produit traité qui est une matière première sûre (SRM).

2. Procédé selon la revendication 1, dans lequel ladite fragmentation est prolongée jusqu'à obtenir des particules ayant un diamètre allant de 0,1 à 100 mm, de préférence entre 0,1 et 1 mm.

3. Procédé selon l'une des revendications 1 ou 2, où ladite fragmentation est obtenue par cryobroyage ou par broyage classique.

4. Procédé selon la revendication 1, où ladite cavitation est réalisée à une T entre 20 et 80 °C, de préférence à 40 °C.

5. Procédé selon l'une des revendications 1 à 4, dans lequel ladite cavitation est réalisée dans un environnement acide et ladite acidité est obtenue par l'ajout d'acide inorganique, ou par l'ajout d'un acide dérivant d'une décomposition organique, ou à partir de déchets acides de l'industrie alimentaire.

6. Procédé selon l'une des revendications 1 à 4, dans lequel ledit matériau est des MMMF ou des MMVF et ledit procédé de cavitation est réalisé dans un environnement basique et ladite basicité est obtenue par l'ajout de bases inorganiques, ou par l'ajout de déchets industriels, tels que des bases de décapage.

7. Procédé selon l'une des revendications 1 à 6, dans lequel ledit catalyseur métallique est sélectionné parmi un ou plusieurs des métaux et/ou oxydes et/ou sels de : fer, aluminium, baryum, calcium, plomb, lithium, fluor, titane.

8. Installation pour mettre en oeuvre le procédé selon l'une des revendications 1 à 7, qui est une installation mobile et comprend au moins un premier conteneur (40) et un deuxième conteneur (41), où lesdits conteneurs (40, 41) sont chacun un volume fermé, et ledit premier conteneur (40) comprend :
- au moins une trémie d'alimentation (2), adaptée pour recevoir les matériaux devant être soumis au procédé ;
- au moins un concasseur pour concasser lesdits matériaux, un concasseur primaire (4) et un concasseur secondaire (9) ;
- au moins un orifice d'évacuation (21), duquel lesdits matériaux prétraités sortent et à partir duquel ils sont transportés, par le biais d'un canal de liaison (45), vers ledit deuxième conteneur (41), qui comprend :
- au moins un orifice d'admission (2), adapté pour recevoir lesdits matériaux prétraités sortant dudit premier conteneur (40) ;
- au moins un appareil de cavitation centrifuge (11) ;
- au moins un four à microondes (12), où ledit four à microondes fonctionne à une température et une pression contrôlées ;
- au moins un orifice d'évacuation (27), duquel ledit produit inerte (SRM) sort.

9. Installation selon la revendication 8, dans laquelle lesdits conteneurs (40, 41) sont limités par une surface inférieure (30), formant la base (33) dudit conteneur, une surface supérieure (31) et des surfaces latérales (32) et ledit premier conteneur (40) comprend également au moins une buse (22) par le biais de laquelle de l'eau est introduite dans ledit premier conteneur (40), comprenant une série de buses (22), qui injectent de l'eau depuis le dessus dans ledit premier conteneur (40) et un système de collecte (25) de ladite eau, où ledit système de collecte (25) est placé au-dessus de ladite base (33) et fait s'écouler ladite eau vers un canal (46), qui passe à travers un orifice d'évacuation (24).

10. Installation selon la revendication 9, dans laquelle ledit deuxième conteneur (41) comprend également un orifice d'admission (37) pour charger de l'eau provenant du réseau de distribution, qui est de préférence stockée dans un réservoir (42) et est donc pompée dans un tube (43) qui, passant à travers un orifice d'évacuation (39), la transporte vers lesdites buses (22).

11. Installation selon la revendication 9 ou 10, dans laquelle ledit deuxième conteneur (41) comprend également un orifice d'admission (44) par le biais duquel le canal (46) entre, injectant dans ledit deuxième conteneur (41) l'eau devant être traitée sortant dudit premier conteneur (40), passant à travers une unité de traitement d'eau (47) à l'intérieur dudit deuxième conteneur (41) pour sortir sous forme d'eau purifiée par le biais d'un orifice d'évacuation (38).
